# EUROPÄISCHE PATENTSCHRIFT

(11) **EP 3 421 654 B1**
(45) Veröffentlichungstag und Bekanntmachung des Hinweises auf die Patenterteilung: **07.04.2021**
(21) Anmeldenummer: 17178094.3
(22) Anmeldetag: 27.06.2017
(51) Int. Cl.: D04H 1/70, D04H 3/02

(54) **VORRICHTUNG MIT ZUMINDEST EINER TEILCHEN- UND/ODER FASERERZEUGUNGSEINRICHTUNG UND MIT ZUMINDEST EINEM ENDLOS-BAND**
DEVICE WITH AT LEAST ONE PARTICLE AND/OR FIBRE GENERATING DEVICE AND AT LEAST ONE ENDLESS BELT
DISPOSITIF COMPRENANT AU MOINS UN DISPOSITIF DE PRODUCTION DE FIBRES ET/OU DE PETITES PIÈCES ET COMPRENANT AU MOINS UNE BANDE CONTINUE

(43) Veröffentlichungstag der Anmeldung: 02.01.2019
(73) Patentinhaber: Reifenhäuser GmbH & Co. KG Maschinenfabrik, 53844 Troisdorf (DE)
(72) Erfinder: Eilers, Peter, 53840 Troisdorf (DE); Sanden, Sven, 51379 Leverkusen (DE); Inderfurth, Tobias, 53639 Königswinter (DE)
(74) Vertreter: Rohmann, Michael

(56) Entgegenhaltungen:
- WO-A1-01/34892
- CN-U- 205 010 947
- CN-U- 205 855 145

## Beschreibung

Die Erfindung betrifft eine Vorrichtung mit zumindest einer Teilchen- und/oder Fasererzeugungseinrichtung, vorzugsweise fernerhin mit zumindest einer Behandlungsvorrichtung zum Behandeln der Teilchen und/oder Fasern - insbesondere zum Temperieren und/oder Verstrecken und/oder Verteilen der Teilchen und/oder Fasern -, wobei die Vorrichtung zumindest ein Endlos-Band - insbesondere zumindest ein Endlos-Siebband - für die Ablage der Teilchen und/oder Fasern zur Teilchenablage und/oder Faserablage aufweist, wobei das Endlos-Band - insbesondere das Endlos-Siebband - zwischen zumindest zwei Umlenkwalzen über zumindest zwei Tragrollen geführt ist, wobei sich die Tragrollen jeweils über die gesamte Breite des Endlos-Bandes bzw. Endlos-Siebbandes erstrecken. Bei der Vorrichtung handelt es sich insbesondere um ein Spunbond-Vorrichtung und/oder und eine Meltblown-Vorrichtung zur Erzeugung von Endlosfilamenten.

Vorrichtungen der vorstehend beschrieben Art sind aus der Praxis in unterschiedlichen Ausführungsformen bekannt. Bei vielen dieser bekannten Vorrichtungen - insbesondere auch Spunbond-Vorrichtungen und Meltblown-Vorrichtungen - ist das Endlos-Siebband zur Aufnahme der Teilchen bzw. Filamente als Gewebeband aus Kunststoff ausgebildet und dieses Endlos-Siebband wird über weite Strecken an seiner Unterseite ganzflächig von plattenförmigen Elementen reibschlüssig unterstützt. Somit hat das Endlos-Siebband unmittelbaren Kontakt zu den plattenförmigen Elementen. Die plattenförmigen Elemente sind beispielsweise in Form Stahlblechen oder Kunststoffplatten ausgeführt. Siebbandbereiche mit relativ hohem Verschleiß werden oftmals zusätzlich durch schnellwechselbare Stahlprofile an ihrer Unterseite unterstützt. Dabei findet ein unerwünscht hoher Verschleiß sowohl an dem Endlos-Siebband als auch an den unterstützenden Platten und Profilen statt. Zusätzlich entstehen unangenehme Laufgeräusche und aufgrund der Reibung wird eine verhältnismäßig hohe Antriebsenergie für den Antrieb des Endlos-Siebbandes benötigt. Von besonderem Nachteil ist bei den aus der Praxis bekannten Vorrichtungen, dass durch Abrieb entstandene Partikel in das durch das Endlos-Siebband geförderte Produkt - insbesondere in eine Vliesbahn aus Filamenten - gelangen. Dadurch werden die geförderten Produkte verschmutzt und können unbrauchbar werden, so dass ein verhältnismäßig hoher Ausschuss entstehen kann. Der Verschleiß des Endlos-Siebbandes verläuft über die Betriebsdauer - vor allem aufgrund von vorgeschädigten Reibstellen und anwachsendem Abrieb - quasi exponentiell. Das hat zur Folge, dass ein relativ früher Austausch der Endlos-Siebbänder erforderlich wird. Damit sind nicht unerhebliche Betriebskosten verbunden. Auch die durch Abrieb beeinträchtigten unterstützenden Konstruktionen müssen relativ oft ausgewechselt werden. Das hat einen unerwünschten Maschinenstillstand zur Folge und außerdem verhältnismäßig hohe Ersatzteilkosten. Im Ergebnis sind die bislang bekannten Maßnahmen verbesserungsbedürftig.

Aus CN 205855145 U ist eine Einspeisemaschine mit einem Förderband bekannt, die insbesondere im Bergbau bzw. in der Bergtechnik eingesetzt wird. Die Vorrichtung weist einen Fülltrichter mit einem darunter angeordneten Ablageförderband auf. Für die Bewegung des Förderbandes sind eine Antriebswalze und eine Umlenkwalze vorgesehen. Unter der Oberseite des Ablageförderbandes ist eine Mehrzahl von Tragrollen angeordnet, über die das Ablageförderband geführt wird. Diese Vorrichtung hat sich in der Praxis nicht bewährt.

Weiterhin ist aus WO 01/34892 A1 eine Vorrichtung für die Herstellung einer Faserbahn bekannt. Dazu werden Fasern auf einem Ablageförderband abgelegt, in Förderrichtung transportiert und anschließend wird die Faserbahn von dem Ablageförderband getrennt. Zum Transport der Faserbahn wird das Ablageförderband über Rollen umgelenkt bzw. geführt. Dabei ist zwischen zwei Umlenkrollen jeweils genau eine Tragrolle angeordnet. Auch diese Vorrichtung hat sich in der Praxis nicht durchgesetzt.

Schließlich ist aus CN 205010947 U eine Tragrolle für ein Förderband bekannt, dass in der kohlechemischen Industrie verwendet wird. Nähere relevante Angaben über die Tragrollen sind dem Dokument nicht entnehmbar.

Der Erfindung liegt das technische Problem zugrunde, eine Vorrichtung der eingangs genannten Art anzugeben, bei der die oben beschriebenen Nachteile auf einfache und effektive Weise vermieden werden können.

Zur Lösung dieses technischen Problems lehrt die Erfindung eine Vorrichtung der eingangs beschriebenen Art, welche dadurch gekennzeichnet ist, dass die Tragrolle bzw. die Tragrollen einen Durchmesser D von kleiner 200 mm, vorzugsweise von kleiner 190mm, bevorzugt von kleiner 180mm und besonders bevorzugt von kleiner oder gleich 170 mm aufweisen,
und dass zwei Tragrollen in Förderrichtung des Endlos-Bandes bzw. Endlos-Siebbandes einen Abstand von mehr als 1000 mm, vorzugsweise von mehr als 1700 mm, bevorzugt mehr als 2000 mm und besonders bevorzugt von mehr als 2500 mm aufweisen.

Nach besonders empfohlener Ausführungsform sind zwischen zwei Umlenkwalzen zumindest zwei erfindungsgemäße Tragrollen vorgesehen. - Endlos-Band bzw. Endlos-Siebband meint im Rahmen der Erfindung auch ein Endlos-Band bzw. Endlos-Siebband, das aus einer Mehrzahl von Bandabschnitten zusammengefügt ist bzw. bei dem eine Mehrzahl von aneinander fixierten Bandabschnitten das Endlos-Band bzw. Endlos-Siebband ergeben.

Eine ganz besonders bevorzugte Ausführungsform der Erfindung ist dadurch gekennzeichnet, dass die Vorrichtung als Fasererzeugungseinrichtung ausgebildet ist und dass die erzeugten Fasern auf dem Endlos-Band bzw. Endlos-Siebband abgelegt werden. - Nach einer sehr empfohlenen Ausführungsform der Erfindung ist die erfindungsgemäße Vorrichtung bzw. die Fasererzeugungseinrichtung als Spundbond-Vorrichtung ausgebildet. Gemäß dieser Ausführungsform weist die Vorrichtung zumindest eine Spinnerette zum Erspinnen von Endlos-Filamenten auf, weiterhin als Behandlungsvorrichtungen zumindest eine Kühlvorrichtung zum Kühlen der Endlosfilamente sowie zumindest eine Verstreckvorrichtung zum Verstrecken der Endlosfilamente auf. Es liegt im Rahmen der Erfindung, dass die verstreckten Endlosfilamente als Vliesablage auf dem Endlos-Band bzw. Endlos-Siebband ablegbar sind. Zweckmäßigerweise ist zwischen der Spinnerette und der Kühlvorrichtung zumindest eine Monomerabsaugungsvorrichtung angeordnet. Gemäß einer empfohlenen Ausführungsform ist die Kühlvorrichtung mit zumindest zwei in Filamentströmungsrichtung übereinander bzw. hintereinander angeordneten Kühlkammern ausgestattet, in denen die Endlos-Filamente mit Kühlluft unterschiedlicher Temperatur beaufschlagt werden können. Empfohlenermaßen weist die Verstreckvorrichtung einen an die Kühlvorrichtung anschließenden Zwischenkanal sowie einen an den Zwischenkanal anschließenden Unterziehkanal auf. Eine bevorzugte Ausführungsform zeichnet sich dadurch aus, dass zwischen der Verstreckvorrichtung und dem Endlos-Band bzw. Endlos-Siebband zumindest ein Diffusor vorgesehen ist, den die Endlosfilamente vor ihrer Ablage auf dem Endlos-Band durchlaufen. Eine besonders empfohlene Ausführungsform ist dadurch gekennzeichnet, dass das Aggregat aus der Kühlvorrichtung und der Verstreckvorrichtung als geschlossenes Aggregat ausgebildet ist, in dem außer der Zuführung der Kühlluft in der Kühlvorrichtung keine weitere Luftzufuhr erfolgt. - Der Erfindung liegt die Erkenntnis zugrunde, dass sich die erfindungsgemäßen Maßnahmen bei einer solchen Spunbond-Vorrichtung ganz besonders bewährt haben. In diesem Zusammenhang liegt der Erfindung weiterhin die Erkenntnis zugrunde, dass bei vielen der bislang aus der Praxis bekannten Spunbond-Vorrichtungen die Vliesablage bzw. die resultierenden Spunbond-Vliese durch den Abrieb an dem Endlos-Band einerseits und an den das Endlos-Band unterstützenden Konstruktionselementen andererseits ganz besonders nachteilhaft beeinträchtigt werden. Insoweit schafft die erfindungsgemäße Lehre vor allem bei Spunbond-Vorrichtungen bzw. im Hinblick auf die erzeugten Spundbond-Vliese auf verhältnismäßig einfache, effektive und funktionssichere Weise Abhilfe.

Nach weiterer sehr empfohlener Ausführungsform der Erfindung ist die erfindungsgemäße Vorrichtung als Fasererzeugungseinrichtung in Form einer Meltblown-Vorrichtung ausgebildet. Bei der auf dem Endlos-Band abgelegten Vliesablage handelt es sich dann um eine Meltblown-Vliesablage bzw. um ein Meltblown-Vlies. Die erfindungsgemäße Vorrichtung weist bei dieser Ausführungsform zumindest eine Meltblown-Düse zur Erzeugung von Endlosfilamenten auf und diese Endlosfilamente sind als Meltblown-Vlies auf dem Endlos-Band bzw. Endlos-Siebband ablegbar. - Der Erfindung liegt auch hier die Erkenntnis zugrunde, dass Meltblown-Vliese bei vielen der bislang bekannten Meltblown-Vorrichtungen durch den Abrieb am Endlos-Band einerseits und durch den Abrieb an den unterstützenden Konstruktionselementen andererseits negativ beeinträchtigt werden. Die Erfindung schafft hier auch bei Meltblown-Vliesen auf überraschend einfache und effiziente Weise Abhilfe.

Eine besonders bewährte Ausführungsform der Erfindung ist dadurch gekennzeichnet, dass die Produktionsgeschwindigkeit der Vorrichtung und somit die Endlos-Bandgeschwindigkeit bzw. Endlos-Siebbandgeschwindigkeit 100 bis 1500 m/min, insbesondere 200 bis 1300 m/min, vorzugsweise mehr als 900 m/min und bevorzugt mehr als 1000 m/min beträgt. Es liegt dabei im Rahmen der Erfindung, dass die Vorrichtung mit der Maßgabe eingerichtet ist, dass die Drehzahl der Tragrollen mehr als 1500 Upm, insbesondere mehr als 1800 Upm, bevorzugt mehr als 1900 Upm und sehr bevorzugt mehr als 2000 Upm beträgt. Nach einer zweckmäßigen Ausgestaltung der Erfindung liegt die Drehzahl der Tragrollen im Bereich zwischen 1000 und 2800 Upm.

Vorzugsweise sind die Tragrollen als Rohre bzw. als Hohlzylinder ausgebildet. Bei dieser bevorzugten Ausführungsform weisen die Wandungen der hohlzylindrischen Tragrollen eine Wandstärke w von 3 bis 30 mm und vorzugsweise von 3 bis 10 mm auf. Zweckmäßigerweise besteht die Wandung der Tragrollen aus Kunststoff und zwar insbesondere aus einem faserverstärkten Kunststoff. Ganz besonders bevorzugt ist als Material für die Wandung der Tragrollen ein kohlefaserverstärkter Kunststoff.

Der Erfindung liegt die Erkenntnis zugrunde, dass es zweckmäßig ist, das Endlos-Band bzw. Endlos-Siebband durch ultraleichtlaufende Tragrollen abzustützen und zu führen. Die dabei auftretende Rollreibung reduziert den Verschleiß am Endlos-Band auf ein Minimum und ein Schlupf zwischen Endlos-Band und Rollenoberfläche tritt nicht auf. Der Einsatz von ultraleichtlaufenden Tragrollen erhöht die Lebensdauer der Vorrichtungskomponenten und die Anlagenverfügbarkeit.

Eine besonders empfohlene Ausführungsform der Erfindung ist dadurch gekennzeichnet, dass zwischen zwei Umlenkwalzen des Endlos-Bandes zumindest drei Tragrollen angeordnet sind, die sich jeweils über die gesamte Breite des Endlos-Bandes erstrecken. Gemäß einer bewährten Ausführungsvariante sind zwischen zwei Umlenkwalzen des Endlos-Bandes lediglich zwei oder lediglich drei Tragrollen vorgesehen.

Nach einer ersten bevorzugten Ausführungsform der Erfindung erstreckt sich zumindest eine Tragrolle bzw. erstrecken sich vorzugsweise alle Tragrollen (jeweils) als eine einzige durchgehende Tragrolle über die gesamte Breite des Endlos-Bandes bzw. Endlos-Siebbandes. Eine solche Tragrolle weist zweckmäßigerweise keine Trennstelle bzw. keinen trennenden Spalt über ihre Längserstreckung quer zur Förderrichtung des Endlos-Bandes auf. - Nach einer zweiten bevorzugten Ausführungsvariante der Erfindung setzt sich zumindest eine Tragrolle bzw. setzen sich vorzugsweise alle Tragrollen (jeweils) aus Teil-Tragrollen zusammen. Dabei sind in Längsrichtung einer Tragrolle (quer zur Förderrichtung des Endlos-Bandes) mehrere - vorzugsweise zwei - Teil-Tragrollen hintereinander angeordnet, so dass sie sich zu der gesamten, sich über die Breite des Endlos-Bandes erstreckenden Tragrolle ergänzen. Zwei Teil-Tragrollen sind dabei zweckmäßigerweise über eine Lageranordnung miteinander verbunden. Vorzugsweise setzt sich eine sich über die Breite des Endlos-Bandes erstreckende Tragrolle aus zwei hintereinander angeordneten Teil-Tragrollen zusammen, welche beiden Teil-Tragrollen bevorzugt über eine Lageranordnung miteinander verbunden sind.

Es liegt im Rahmen der Erfindung, dass einer erfindungsgemäßen Tragrolle zumindest zwei Lager bzw. Wälzlager zugeordnet sind, die an den Enden der Tragrolle angeordnet sind. Ebenso liegt es im Rahmen der Erfindung, dass jeder Teil-Tragrolle zumindest zwei Lager bzw. Wälzlager zugeordnet sind, die an den Enden der Teil-Tragrollen vorhanden sind. Zweckmäßigerweise sind die Lager als Pendelkugellager ausgebildet. - Eine empfohlene Ausführungsform der Erfindung ist dadurch gekennzeichnet, dass die an beiden Enden bzw. an beiden Stirnenden einer Tragrolle angeordneten Lager bzw. Wälzlager mit Innenring und Außenring innerhalb der jeweiligen Tragrolle angeordnet bzw. aufgenommen sind. Es liegt dabei im Rahmen der Erfindung, dass im Bereich eines Lagers bzw. Wälzlagers ein Lagerzapfen in eine Lagerausnehmung der Tragrolle einfasst und dass das Lager bzw. Wälzlager zwischen dem in der Lagerausnehmung angeordneten Lagerzapfen und der Tragrolle bzw. einer Innenwandung der Tragrolle vorgesehen ist. Zweckmäßigerweise ist diese Anordnung sowohl für eine einzige über die Breite des Endlos-Bandes durchgehende Tragrolle realisiert als auch für eine Teil-Tragrolle als Bestandteil einer Tragrolle.

Bei einer Teil-Tragrolle ist zweckmäßigerweise ebenfalls das an beiden Enden der Teil-Tragrolle angeordnete Lager bzw. Wälzlager mit Innenring und Außenring innerhalb der jeweiligen Teil-Tragrolle angeordnet bzw. aufgenommen. Es liegt dabei im Rahmen der Erfindung, dass bei einer Teil-Tragrolle zumindest ein Lagerzapfen in eine Lagerausnehmung der Teil-Tragrolle einfasst und dass hier das Lager mit Innenring und Außenring zwischen dem jeweiligen Lagerzapfen und einer Innenwandung der Teil-Tragrolle vorgesehen ist. Es liegt weiterhin im Rahmen der Erfindung, dass bei einer Tragrolle aus mehreren Teil-Tragrollen an den Randbereichen des Endlos-Bandes jeweils ein Lagerzapfen von außen in eine Lagerausnehmung einer randseitigen Teil-Tragrolle einfasst. Zweckmäßigerweise fasst an der gegenüberliegenden Seite der jeweiligen Teil-Tragrolle ein Lagerzapfen einer für die Verbindung der Teil-Tragrollen vorgesehen Lageranordnung in eine Lagerausnehmung der betreffenden Teil-Tragrolle ein. Dabei ist vorzugsweise jeweils zwischen den Lagerzapfen und den Innenwandungen der Tragrolle ein Lager bzw. Wälzlager mit Innenring und Außenring zwischengeschaltet.

Gemäß besonders empfohlener Ausführungsform der Erfindung, ist in Bezug auf die Lagerung der erfindungsgemäßen Tragrollen zwischen einem Lager einerseits und der zugeordneten Tragrolle und/oder einem zugeordneten Lagerzapfen andererseits zumindest ein Dichtungsring bzw. O-Dichtungsring angeordnet. Vorzugsweise ist zumindest ein erster Dichtungsring bzw. O-Dichtungsring zur Sicherung bzw. Positionssicherung eines Außenringes des Lagers einer Tragrolle zwischen dem Außenring und der Tragrolle vorgesehen. Zweckmäßigerweise ist dabei der zumindest eine erste Dichtungsring bzw. O-Dichtungsring innerhalb einer Nut der Innenwandung der Tragrolle angeordnet. Weiterhin ist vorzugsweise zumindest ein zweiter Dichtungsring bzw. O-Dichtungsring zur Sicherung bzw. Positionssicherung eines Innenringes des Lages einer Tragrolle zwischen dem Innenring und einem Lagerzapfen für die Tragrolle angeordnet. Dabei ist der zweite Dichtungsring bzw. O-Dichtungsring bevorzugt in einer zweiten Nut untergebracht, welche zweite Nut zweckmäßigerweise in den Lagerzapfen eingebracht ist.

Gemäß sehr empfohlener Ausführungsform der Erfindung ist sowohl dem Außenring des Lagers als auch dem Innenring des Lagers zumindest ein Dichtungsring bzw. O-Dichtungsring zugeordnet, der bevorzugt unmittelbar an dem Außenring und unmittelbar an dem Innenring anliegt. Grundsätzlich kann der Außenring und/oder der Innenring des Lagers auch durch mehrere nebeneinander angeordnete Dichtungsringe bzw. O-Dichtungsringe gesichert werden.

Die bevorzugt vorgesehenen Dichtungsringe bzw. O-Dichtungsringe gewährleisten eine effektive Sicherung des Außenringes und/oder Innenringes gegen Verdrehen in der Lagerausnehmung bzw. auf dem Lagerzapfen. Aufgrund der bevorzugten Ausgestaltung und Anordnung des Lagers wird in vorteilhafter Weise ein relativ leichter Anlauf der Tragrollen erzielt. Durch die Anordnung der Dichtungsringe bilden diese auch eine effektive Einführhilfe für das Lager und somit sind spezielle Einführschrägen für das Einführen eines Lagers nicht erforderlich. Die Dichtungsringe gewährleisten aufgrund ihrer dämpfenden Wirkung weiterhin eine Reduktion von störenden Schwingungen und Geräuschen und bewirken somit auch eine vorteilhafte Geräuschreduzierung. Insbesondere ein am Außenring des Lagers angeordneter Dichtungsring dichtet effektiv gegen einen unerwünschten Schmierstoffdurchtritt ab.

Eine besonders bevorzugte Ausführungsform der Erfindung ist dadurch gekennzeichnet, dass ein Lager bzw. Wälzlager einer Tragrolle mit einem Abstand a zu dem Stirnende der Tragrolle angeordnet ist, welcher Abstand a mindestens 1/30, bevorzugt mindestens 1/25 der Länge L der Tragrolle beträgt. Zweckmäßigerweise gilt diese Maßgabe auch für die Ausführungsform mit den Teil-Tragrollen, die sich zu einer gesamten Tragrolle zusammensetzen, wobei L sich dann auf die Länge der gesamten Tragrolle bezieht. Bei den vorstehend beschriebenen Ausführungsformen wird der Abstand a bevorzugt von der bezüglich der Längserstreckung der Tragrolle gesehenen Mitte des Lagers aus gemessen.

Nach einer empfohlenen Ausführungsform der Erfindung weisen die erfindungsgemäßen Tragrollen einen Schlankheitsgrad von mehr als 1:17,5, vorzugsweise von mehr als 1:22,5 und bevorzugt von mehr als 1:29,5 auf. - Erfindungsgemäß weisen zwei Tragrollen in Förderrichtung des Endlos-Bandes bzw. Endlos-Siebbandes einen gegenseitigen Abstand A von mehr als 1000mm, vorzugsweise von mehr als 1700 mm, bevorzugt von mehr als 2000 mm und besonders bevorzugt von mehr als 2500 mm auf.

Gemäß bevorzugter Ausführungsform der Erfindung ist der Zwischenraum zwischen zwei aufeinanderfolgenden Tragrollen durch zumindest ein sich in Förderrichtung des Endlos-Bandes bzw. Endlos-Siebbandes erstreckendes Plattenelement zumindest teilweise, vorzugsweise größtenteils und bevorzugt vollständig bzw. quasi vollständig ausgefüllt. Es liegt im Rahmen der Erfindung, dass die Oberseite eines solchen Plattenelementes mit einem Abstand z unterhalb der Oberseite der Tragrollen angeordnet ist. Zweckmäßigerweise beträgt der Abstand z der genannten Oberseiten weniger als der Radius r der Tragrollen und bevorzugt ist dieser Abstand z kleiner als die Hälfte des Radius r der Tragrollen. Bei den Plattenelementen handelt es sich zweckmäßigerweise um geschlossene Plattenelemente, die bevorzugt begehbar sind. Solche Plattenelemente sind in vorteilhafter Weise einfach und effektiv zu reinigen.

Eine sehr empfohlene Ausführungsform der Erfindung ist dadurch gekennzeichnet, dass eine Tragrolle in einem Gehäuse aufgenommen ist, wobei das Gehäuse zumindest eine Seitenwand und eine an die Seitenwand anschließende unterseitige Bodenwand aufweist. Gemäß einer Ausführungsvariante weist ein Gehäuse bevorzugt zwei gegenüberliegende Seitenwände und eine an die Seitenwände anschließende unterseitige Bodenwand auf. Zweckmäßigerweise ragt eine Tragrolle mit ihrer Oberseite aus dem zugeordneten Gehäuse. Es liegt im Rahmen der Erfindung, dass sich das Gehäuse zumindest über den Großteil der Länge L und bevorzugt über die gesamte Länge L der zugeordneten Tragrolle erstreckt. Bei dem Gehäuse für eine Tragrolle handelt es sich zweckmäßigerweise um ein verwindungssteifes und/oder selbsttragendes und/oder hochbelastbares Gehäuse und zwar vorzugsweise um ein Gehäuse aus Stahlblech. Das Gehäuse bildet gleichsam eine Aufnahmekammer für die zugeordnete Tragrolle.

Gemäß einer empfohlenen Ausführungsform der Erfindung liegt ein Plattenelement mit zumindest einem Ende auf einem Gehäuse für eine Tragrolle auf und zweckmäßigerweise auf einer Seitenwand dieses Gehäuses auf. Durch diese Auflage auf dem Gehäuse bzw. auf einer Seitenwand eines Gehäuses erfahren die Plattenelemente eine definierte Ausrichtung bzw. Abstützung. Zweckmäßigerweise sind die Plattenelemente parallel bzw. im Wesentlichen parallel zu dem darüber angeordneten Endlos-Band bzw. Endlos-Siebband angeordnet. Es liegt im Rahmen der Erfindung, dass die Plattenelemente insbesondere eine auf dem Endlos-Band abgelegte Vliesablage effektiv vor störenden Luftströmungen schützen und auf diese Weise können unerwünschte Verwirbelungen an der unverfestigten Vliesablage vermieden werden.

Der Erfindung liegt die Erkenntnis zugrunde, dass durch die erfindungsgemäße Anordnung von Tragrollen zwischen den Umlenkwalzen insbesondere im Hinblick auf Produktionsqualität, Materialschonung und verminderter Komponentenverschleiß beachtliche Vorteile gegenüber den eingangs genannten bislang bekannten Vorrichtungen erreicht werden. Dabei liegt der Erfindung weiterhin die Erkenntnis zugrunde, dass die mit den bekannten Vorrichtungen verbundenen Nachteile vermieden werden können, wenn erfindungsgemäß das Endlos-Band lediglich einer Rollreibung ausgesetzt wird und insofern ein nachteilhafter Reibschluss (wie bei den bisherigen Vorrichtungen) vermieden wird. Auf diese Weise kann der Verschleiß des Endlos-Bandes minimiert werden und insoweit auch der Abrieb dieses Endlos-Bandes auf ein Minimum reduziert werden. Auch findet quasi kein Verschleiß mehr an Berührungsflächen der das Endlos-Band unterstützenden Konstruktionen statt. An den für die Rollreibung verantwortlichen Tragrollen findet so gut wie kein Verschleiß bzw. Abrieb statt und die bevorzugt vorgesehenen und mit Abstand zu dem Endlos-Band angeordneten unterstützenden Plattenelemente erfahren keinen Verschleiß bzw. Abrieb. Von besonderer Bedeutung ist Rahmen der Erfindung, dass aufgrund der Minimierung von Verschleiß und Abrieb keine störenden Abriebpartikel mehr in das mit dem Endlos-Band geförderte Produkt gelangen und von daher die Produktqualität im Vergleich zu vielen bekannten Vorrichtungen erheblich verbessert werden kann. Dieser beachtliche Vorteil hat sich vor allem bei der Erzeugung von Spunbond-Vliesen und Meltblown-Vliesen mit der erfindungsgemäßen Vorrichtung gezeigt. Zu betonen ist auch, dass durch die erfindungsgemäße Konstruktion störende Geräusche im Vergleich zu den bislang bekannten Vorrichtungen erheblich reduziert werden können. Die erfindungsgemäßen Tragrollen wirken geräuschmindernd und das gilt vor allem auch für die bevorzugte Ausführungsform mit den Dichtungsringen bzw. O-Dichtungsringen an den Wälzlagern. Es ist noch darauf hinzuweisen, dass ein Schlupf zwischen dem Endlos-Band und den Tragrollen ohne Schwierigkeiten vermieden werden kann und dass auch insoweit keine Probleme bei der erfindungsgemäßen Vorrichtung resultieren. Es ist fernerhin herauszustellen, dass die erfindungsgemäßen Tragrollen in vorteilhafter Weise eine geringe Eigenmasse und eine geringe Eigenunwucht aufweisen sowie eine geringe Eigenverformung. Durch die bevorzugte Anordnung der Lager bzw. Wälzlager innerhalb der Tragrollen kann die biegekritische Länge der Tragrollen vorteilhaft optimiert werden. Schließlich ist noch hervorzuheben, dass die erfindungsgemäße Vorrichtung auf einfache Weise und vor allem ohne komplizierte bzw. komplexe Baukomponenten realisiert werden kann.

Nachfolgend wird die Erfindung anhand einer lediglich ein Ausführungsbeispiel darstellenden Zeichnung näher erläutert. Es zeigen in schematischer Darstellung:
- Fig. 1: eine Seitenansicht einer erfindungsgemäßen Vorrichtung im Schnitt,
- Fig. 2: eine perspektivische Darstellung der erfindungsgemäßen Vorrichtung,
- Fig. 3: eine vergrößerte Ansicht des unteren Teils der Vorrichtung gemäß Fig. 1,
- Fig. 4: einen Schnitt durch eine erfindungsgemäße Tragrolle in einer ersten Ausführungsform,
- Fig. 5: dem Gegenstand nach Fig. 4 in einer zweiten Ausführungsform und
- Fig. 6: ein vergrößerter Ausschnitt A aus der Fig. 4.

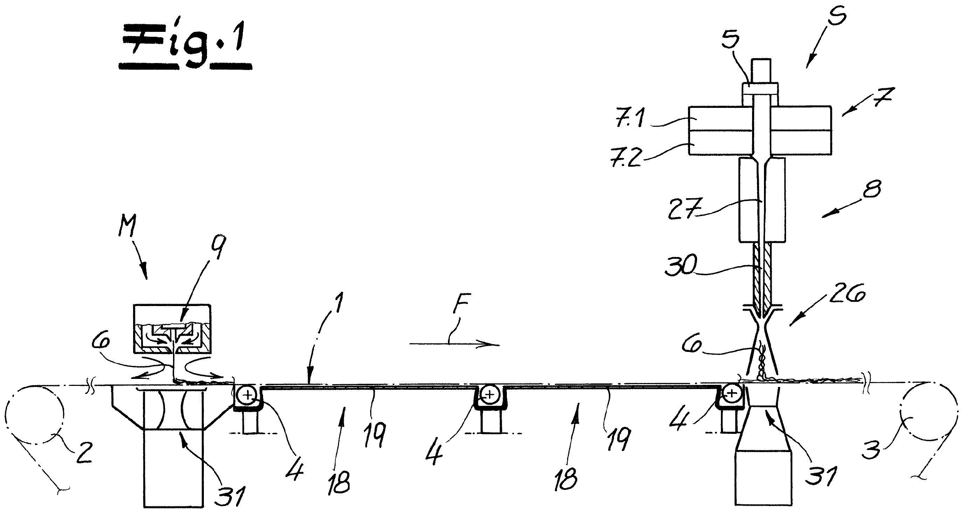

Die Figuren zeigen eine erfindungsgemäße Vorrichtung mit zwei Fasererzeugungseinrichtungen in Form einer Meltblown-Vorrichtung M und einer nachgeschalteten Spunbond-Vorrichtung S. Mit diesen beiden bevorzugten Fasererzeugungseinrichtungen werden im Ausführungsbeispiel Endlosfilamente 6 erzeugt, die auf einem Endlos-Band in Form eines Endlos-Siebbandes 1 als Faserablage bzw. Vliesablage abgelegt werden. Im Ausführungsbeispiel gemäß Fig. 1 werden mit der Meltblown-Vorrichtung M zunächst Endlosfilamente 6 zum Meltblown-Vlies abgelegt, das in Förderrichtung F mit dem Endlos-Siebband 1 von links nach rechts zu der Spunbond-Vorrichtung S transportiert wird. Hier wird auf dem Meltblown-Vlies ein Spunbond-Vlies abgelegt.

Die auf der linken Seite Fig. 1 dargestellte Meltblown-Vorrichtung M weist eine Meltblown-Düse 9 zur Erzeugung der Endlosfilamente 6 auf. Die auf der rechten Seite der Fig. 1 gezeigte Spunbond-Vorrichtung S ist mit einer Spinnerette 5 zum Erspinnen von Endlosfilamenten 6 ausgestattet. Weiterhin weist diese Spunbond-Vorrichtung S als Behandlungsvorrichtung eine Kühlvorrichtung 7 zum Kühlen der Endlosfilamente 6 auf sowie eine Verstreckvorrichtung 8 zum Verstrecken der Endlosfilamente 6. Zweckmäßigerweise und im Ausführungsbeispiel weist die Kühlvorrichtung 7 zwei Kühlkammern 7.1 und 7.2 auf, mit deren Hilfe die Endlosfilamente 1 mit Kühlluft unterschiedlicher Temperatur beaufschlagt werden können. Die Verstreckvorrichtung 8 ist bevorzugt und im Ausführungsbeispiel mit einem an die Kühlvorrichtung 7 anschließenden Zwischenkanal 27 und einem an den Zwischenkanal 27 anschließenden Unterziehkanal 30 ausgestattet. Der Zwischenkanal 27 ist empfohlenermaßen zum Endlos-Siebband 1 hin konvergierend ausgebildet. - Vorzugsweise und im Ausführungsbeispiel ist im Anschluss an die Verstreckvorrichtung 8 ein Diffusor 26 vorgesehen, durch den Endlosfilamente 6 vor der Ablage auf dem Endlos-Siebband 1 geführt werden. Nach empfohlener Ausführungsform und im Ausführungsbeispiel ist das Aggregat aus der Kühlvorrichtung 7 und der Verstreckvorrichtung 8 als geschlossenes Aggregat ausgebildet, wobei außer der Kühlluftzufuhr in der Kühlvorrichtung 7 keine weitere Luftzufuhr in dieses geschlossene Aggregat erfolgt.

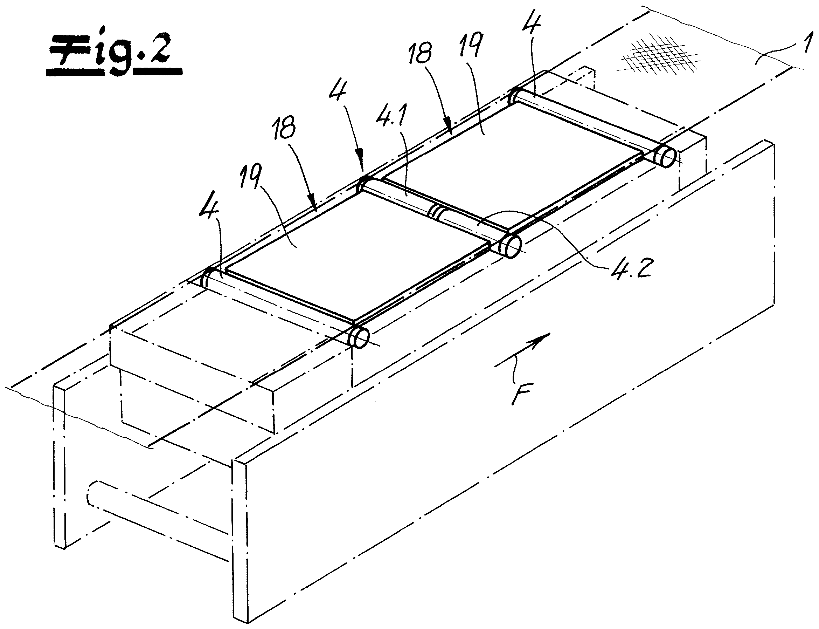

Im Ausführungsbeispiel wird das Endlos-Siebband 1 zwischen zwei Umlenkwalzen 2, 3 über eine Mehrzahl von Tragrollen 4 geführt. Dabei sind im Ausführungsbeispiel drei solcher Tragrollen 4 vorgesehen. Wie sich insbesondere aus der Fig. 2 ergibt, erstrecken sich diese Tragrollen 4 über die gesamte Breite des Endlos-Siebbandes 1. Erfindungsgemäß weisen die Tragrollen 4 einen Durchmesser D von kleiner 200 mm auf. Zweckmäßigerweise beträgt die Endlos-Siebbandgeschwindigkeit 100 bis 1500 m/min.

Nach sehr bevorzugter Ausführungsform im Ausführungsbeispiel sind die Tragrollen 4 als Hohlzylinder ausgebildet und die Wandung 28 dieser hohlzylindrischen Tragrollen 4 besteht zweckmäßigerweise aus Kunststoff bzw. im Wesentlichen aus Kunststoff und sehr bevorzugt aus einem faserverstärkten Kunststoff bzw. im Wesentlichen aus einem faserverstärkten Kunststoff. Hier wird bevorzugt kohlefaserverstärkter Kunststoff für die Wandungen 28 eingesetzt. Die Wandstärke w der Wandungen 28 beträgt vorzugsweise 3 bis 30 mm und bevorzugt 3 bis 10 mm.

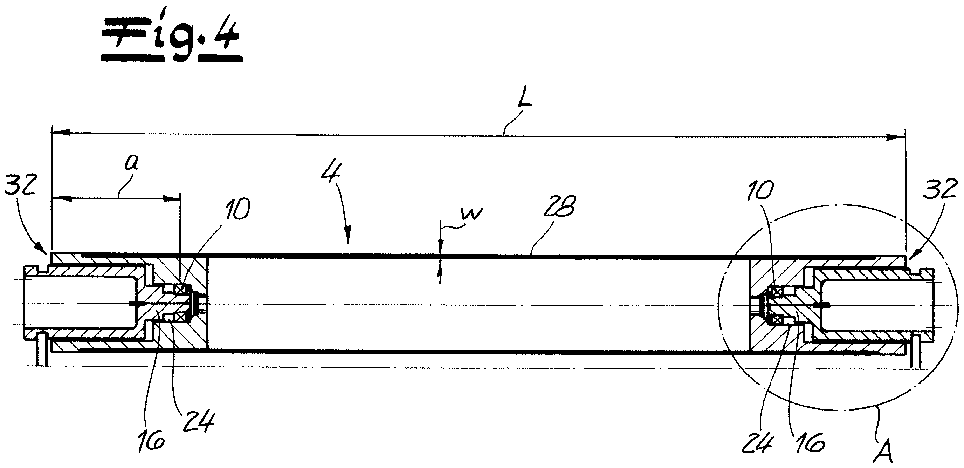

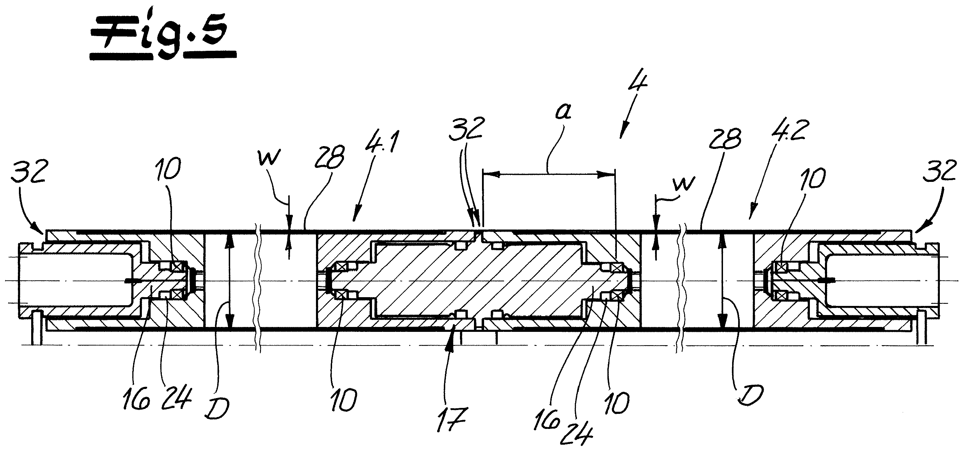

In den Fig. 4 und 5 sind zwei bevorzugte Ausführungsformen einer erfindungsgemäßen Tragrolle 4 dargestellt. Bei der Ausführungsform gemäß Fig. 4 erstreckt sich die Tragrolle 4 als eine einzige durchgehende Tragrolle 4 über die gesamte Breite des Endlos-Siebbandes 1. Dagegen setzt sich bei der Ausführungsform gemäß Fig. 5 die Tragrolle 4 aus zwei Teil-Tragrollen 4.1 und 4.2 zusammen. Die beiden Teil-Tragrollen 4.1 und 4.2 der Tragrolle 4 sind über eine Lageranordnung 17 miteinander verbunden. Vorzugsweise und im Ausführungsbeispiel sind die Tragrollen 4 bzw. die Teil-Tragrollen 4.1 und 4.2 an ihren Enden über Lager in Form von Pendelkugellagern gelagert. Nach besonders empfohlener Ausführungsform und im Ausführungsbeispiel sind die Lager bzw. Wälzlager 10 der Tragrollen 4 mit ihrem Innenring 11 und ihrem Außenring 12 jeweils innerhalb der Tragrolle 4 angeordnet bzw. aufgenommen. Dabei greift bevorzugt jeweils ein Lagerzapfen 16 in eine Lagerausnehmung 24 der Tragrolle 4 ein. Zweckmäßigerweise ist ein Lager bzw. Wälzlager 10 einer Tragrolle 4 mit einem Abstand a zu dem Stirnende 32 der Tragrolle 4 angeordnet. Bei der durchgehenden Tragrolle gemäß Fig. 4 beträgt dieser Abstand a mindestens 1/30, bevorzugt mindestens 1/25 der Länge L der Tragrolle 4.

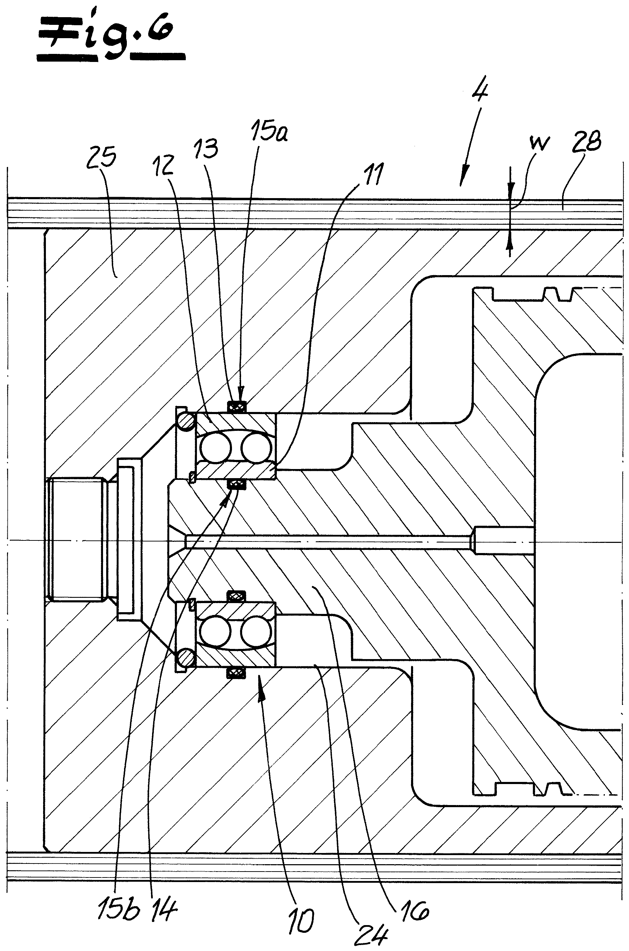

Vor allem in der Fig. 6 ist eine besonders bevorzugte Ausführungsform der Erfindung in Bezug auf die Anordnung und Ausgestaltung des Wälzlagers 10 dargestellt. Empfohlenermaßen und im Ausführungsbeispiel ist ein erster O-Dichtungsring 13 zur Sicherung bzw. Positionssicherung des Außenringes 12 des Wälzlagers 10 zwischen dem Außenring 12 und der Tragrolle 4 vorgesehen. Zweckmäßigerweise ist dieser erste O-Dichtungsring 13 innerhalb einer Nut 15a der Innenwandung 25 der Tragrolle 4 angeordnet. Weiterhin ist empfohlenermaßen und im Ausführungsbeispiel ein zweiter O-Dichtungsring 14 zur Sicherung bzw. Positionssicherung des Innenringes 11 des Wälzlagers 10 zwischen dem Innenring und dem Lagerzapfen 16 für die Tragrolle 4 angeordnet. Dieser zweite O-Dichtungsring 14 ist bevorzugt und im Ausführungsbeispiel innerhalb einer Nut 15b des Lagerzapfens 16 vorgesehen. Die beiden O-Dichtungsringe 13, 14 bewirken eine sehr effektive und präzise Positionssicherung von Außenring 12 und Innenring 11 des Wälzlagers 10 und ein Verdrehen des Außenringes 12 bzw. des Innenringes 11 im Lagersitz bzw. auf dem Lagerzapfen 16 wird funktionssicher vermieden. Im Übrigen ermöglichen die O-Dichtungsringe 13, 14 ein problemloses Einführen des Wälzlagers 10 ohne dass spezielle Einführhilfen wie Einführschrägen und dergleichen erforderlich sind. Zweckmäßigerweise bestehen die O-Dichtungsringe 13, 14 aus einem Elastomer bzw. im Wesentlichen aus einem Elastomer und gemäß einer Ausführungsform handelt es sich bei dem Elastomer um Acrylnitril-Butadien-Kautschuk (NBR) und/oder um einen Fluorkautschuk (FKM).

Es liegt im Rahmen der Erfindung, dass zwei Tragrollen 4 in Förderrichtung F des Endlos-Siebbandes 1 einen Abstand A von mehr als 2000 mm aufweisen. Nach besonders empfohlener Ausführungsform und im Ausführungsbeispiel ist der Zwischenraum 18 zwischen zwei aufeinanderfolgenden Tragrollen 4 durch ein sich in Förderrichtung F des Endlos-Siebbandes 1 erstreckendes Plattenelement 19 ausgefüllt. Es liegt weiterhin im Rahmen der Erfindung, dass die Oberseite eines solchen Plattenelementes 19 mit einem Abstand z unterhalb der Oberseite der Tragrollen 4 angeordnet ist. Dieser Abstand z ist empfohlenermaßen geringer als ein Drittel des Radius r der Tragrollen 4.

Zweckmäßigerweise und im Ausführungsbeispiel sind die Plattenelemente 19 als geschlossene Plattenelemente und empfohlenermaßen als begehbare Plattenelemente 19 ausgebildet. Diese Plattenelemente 19 bestehen vorzugsweise aus einem metallischen Werkstoff bzw. im Wesentlichen aus einem metallischen Werkstoff.

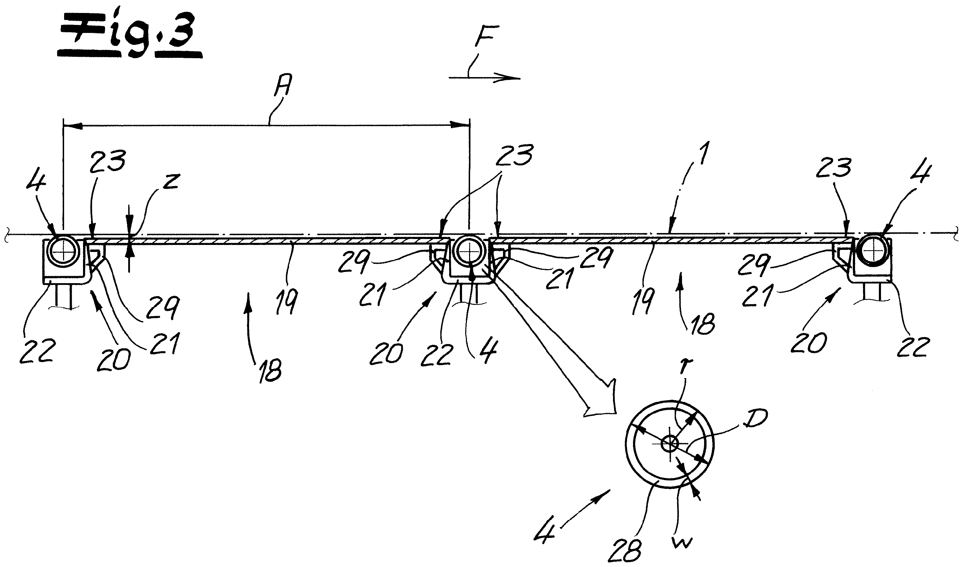

Nach empfohlener Ausführungsform und im Ausführungsbeispiel ist jede Tragrolle 4 in einem Gehäuse 20 aufgenommen, wobei das Gehäuse 20 zumindest eine Seitenwand 21 und eine an die Seitenwand 21 anschließende unterseitige Bodenwand 22 aufweist. Zweckmäßigerweise ist zumindest ein Gehäuse 20 vorgesehen, dass zwei gegenüberliegende Seitenwände 21 und eine an die Seitenwände 21 anschließende unterseitige Bodenwand 22 aufweist. Vorzugsweise und im Ausführungsbeispiel erstreckt sich ein Gehäuse 20 über die Länge L der zugeordneten Tragrolle 4 und die Gehäuse 20 sind nach oben hin bzw. zum Endlos-Siebband 1 hin offen ausgebildet. Nach einer Ausführungsvariante und im Ausführungsbeispiel (s. insbesondere Fig. 1 und 3) weist ein mittleres Gehäuse 20 zwei gegenüberliegende Seitenwände 21 und eine an diese Seitenwände 21 anschließende unterseitige Bodenwand 22 auf. Dagegen sind die links und rechts von diesem Gehäuse 20 angeordneten Gehäuse 20 lediglich mit einer Seitenwand 21 und einer daran anschließenden unterseitigen Bodenwand 22 ausgestattet. Diese Gehäuse 20 werden an der der Seitenwand 21 gegenüberliegenden Seite von den unter der jeweiligen Fasererzeugungseinrichtung angeordneten Absaugeinrichtungen 31 begrenzt. - Vorzugsweise besteht ein Gehäuse 20 aus Stahl bzw. Stahlblech und empfohlenermaßen ist ein Gehäuse 20 als verwindungssteifes, selbsttragendes und hochbelastbares Stahlblechgehäuse ausgestaltet. Zweckmäßigerweise und im Ausführungsbeispiel liegen die Plattenelemente 19 mit ihren Enden 23 auf den Gehäusen 20 bzw. auf einer Seitenwand 21 der Gehäuse 20 auf. Bevorzugt und im Ausführungsbeispiel ist dazu an den Seitenwänden 21 der Gehäuse 20 ein Tragelement 29 für das Ende 23 eines Plattenelementes 19 angeschlossen. Es liegt im Rahmen der Erfindung, dass die Plattenelemente 19 parallel bzw. im Wesentlichen parallel zum Endlos-Siebband 1 angeordnet sind.

## Patentansprüche

1. Vorrichtung mit zumindest einer Teilchen- und/oder Fasererzeugungseinrichtung, vorzugsweise fernerhin mit zumindest einer Behandlungsvorrichtung zum Behandeln der Teilchen und/oder Fasern - insbesondere zum Temperieren und/oder Verstrecken und/oder Verteilen der Teilchen und/oder Fasern -, wobei die Vorrichtung zumindest ein Endlos-Band - insbesondere zumindest ein Endlos-Siebband (1) - für die Ablage der Teilchen und/oder Fasern zur Teilchenablage und/oder Faserablage aufweist, wobei
das Endlos-Band - insbesondere das Endlos-Siebband (1) - zwischen zumindest zwei Umlenkwalzen (2, 3) über zumindest zwei Tragrollen (4) geführt ist, wobei sich die Tragrollen (4) jeweils über die gesamte Breite des Endlos-Bandes bzw. Endlos-Siebbandes (1) erstrecken, d a **durchgekennzeichnet**, dass die Tragrollen (4) einen Durchmesser (D) von kleiner 200 mm, vorzugsweise von kleiner 190 mm, bevorzugt von kleiner 180 mm und besonders bevorzugt von kleiner oder gleich 170 mm aufweisen,
wobei zwei Tragrollen (4) in Förderrichtung des Endlos-Bandes bzw. Endlos-Siebbandes (1) einen Abstand (A) von mehr als 1000 mm, vorzugsweise von mehr als 1700 mm, bevorzugt mehr als 2000 mm und besonders bevorzugt von mehr als 2500 mm aufweisen.

2. Vorrichtung nach Anspruch 1, wobei die Vorrichtung als Fasererzeugungseinrichtung zumindest eine Spinnerette (5) zum Erspinnen von Endlosfilamenten (6) aufweist, weiterhin zumindest eine Kühlvorrichtung (7) zum Kühlen der Endlosfilamente (6) sowie zumindest eine Verstreckvorrichtung (8) zum Verstrecken der Endlosfilamente (6) aufweist und wobei die verstreckten Endlosfilamente (6) als Vliesablage auf dem Endlos-Band bzw. Endlos-Siebband (1) ablegbar sind.

3. Vorrichtung nach Anspruch 1, wobei die Vorrichtung als Fasererzeugungseinrichtung zumindest eine Meltblown-Düse (9) zur Erzeugung von Endlosfilamenten (6) aufweist und wobei die Endlosfilamente (6) als Vliesablage auf dem Endlos-Band bzw. Endlos-Siebband (1) ablegbar sind.

4. Vorrichtung nach einem der Ansprüche 1 bis 3, wobei die Produktionsgeschwindigkeit der Vorrichtung und somit die Endlos-Bandgeschwindigkeit bzw. Endlos-Siebbandgeschwindigkeit 100 bis 1500 m/min, insbesondere 200 bis 1300 m/min, vorzugsweise mehr als 900 m/min, bevorzugt mehr als 1000 m/min beträgt.

5. Vorrichtung nach einem der Ansprüche 1 bis 4, wobei zwischen zwei Umlenkwalzen (2, 3) des Endlos-Bandes zumindest drei Tragrollen (4) angeordnet sind, die sich über die gesamte Breite des Endlos-Bandes erstrecken.

6. Vorrichtung nach einem der Ansprüche 1 bis 5, wobei die Tragrollen (4) als Rohre bzw. Hohlzylinder ausgebildet sind und wobei die Wandung (28) der Tragrollen (4) eine Wandstärke (w) von 3 mm bis 30 mm, vorzugsweise von 3 mm bis 10 mm aufweist.

7. Vorrichtung nach Anspruch 6, wobei die Wandung (28) der Tragrollen (4) aus Kunststoff, insbesondere aus einem faserverstärkten Kunststoff, bevorzugt aus einem kohlefaserverstärkten Kunststoff bestehen bzw. im Wesentlichen bestehen.

8. Vorrichtung nach einem der Ansprüche 1 bis 7, wobei die an beiden Enden einer Tragrolle (4) angeordneten Lager bzw. Wälzlager (10) mit Innenring (11) und Außenring (12) innerhalb der jeweiligen Tragrolle (4) angeordnet bzw. aufgenommen sind.

9. Vorrichtung nach einem der Ansprüche 1 bis 8, wobei zwischen einem Lager bzw. Wälzlager (10) und der zugeordneten Tragrolle (4) zumindest ein Dichtungsring bzw. O-Dichtungsring (13, 14) angeordnet ist.

10. Vorrichtung nach Anspruch 9, wobei zumindest ein (erster) Dichtungsring bzw. O-Dichtungsring (13) zur Sicherung bzw. Positionssicherung eines Außenringes (12) des Lagers bzw. Wälzlagers (10) zwischen dem Außenring (12) und der Tragrolle (4) vorgesehen ist und vorzugsweise innerhalb einer Nut (15) der Tragrolle (4) angeordnet ist.

11. Vorrichtung nach einem der Ansprüche 9 oder 10, wobei zumindest ein (zweiter) Dichtungsring bzw. O-Dichtungsring (14) zur Sicherung bzw. Positionssicherung eines Innenringes (11) des Lagers bzw. Wälzlagers (10) zwischen dem Innenring (11) und einem Lagerzapfen (16) für die Tragrolle (4) angeordnet ist.

12. Vorrichtung nach einem der Ansprüche 1 bis 11, wobei sich zumindest eine Tragrolle (4) - vorzugsweise alle Tragrollen (4) - als eine einzige durchgehende Tragrolle (4) über die gesamte Breite des Endlos-Bandes bzw. Endlos-Siebbandes (1) erstreckt/erstrecken.

13. Vorrichtung nach einem der Ansprüche 1 bis 12, wobei sich zumindest eine Tragrolle (4) - vorzugsweise alle Tragrollen (4) - (jeweils) aus Teil-Tragrollen (4.1, 4.2) zusammensetzt/zusammensetzen, wobei vorzugsweise zwei Teil-Tragrollen (4.1, 4.2) einer Tragrolle (4) über eine Lageranordnung (17) miteinander verbunden sind.

14. Vorrichtung nach einem der Ansprüche 1 bis 13, wobei ein Lager bzw. Wälzlager (10) einer Tragrolle (4) mit einem Abstand (a) zum Ende bzw. Stirnende (18) der Tragrolle (4) angeordnet ist, welcher Abstand (a) mindestens 1/30, bevorzugt mindestens 1/25 der Länge (L) der Tragrolle (4) beträgt.

15. Vorrichtung nach einem der Ansprüche 1 bis 14, wobei die Tragrollen (4) einen Schlankheitsgrad von mehr als 1:17,5, vorzugsweise von mehr als 1:22,5 und bevorzugt von mehr als 1:29,5 aufweisen.

16. Vorrichtung nach einem der Ansprüche 1 bis 15, wobei der Zwischenraum (18) zwischen zwei aufeinanderfolgenden Tragrollen (4) durch zumindest ein sich in Förderrichtung des Endlos-Bandes bzw. Endlos-Siebbandes (1) erstreckendes Plattenelement (19) zumindest teilweise, vorzugsweise größtenteils ausgefüllt ist und wobei die Oberseite eines solchen Plattenelementes (19) mit einem Abstand (z) unterhalb der Oberseite der Tragrollen (4) angeordnet ist.

17. Vorrichtung nach einem der Ansprüche 1 bis 16, wobei eine Tragrolle (4) in einem Gehäuse (20) aufgenommen ist, wobei das Gehäuse (20) zumindest eine Seitenwand (21) und eine an die Seitenwand (21) anschließende unterseitige Bodenwand (22) aufweist und wobei sich das Gehäuse (20) zumindest über den Großteil der Länge (L) der zugeordneten Tragrolle (4) erstreckt.

18. Vorrichtung nach einem der Ansprüche 16 oder 17, wobei ein Plattenelement (19) mit zumindest einem Ende (23) auf einem Gehäuse (20) bzw. auf einer Seitenwand (21) eines Gehäuses (20) aufliegt.

## Claims

1. Apparatus comprising at least one particle and/or fibre-generating device, preferably furthermore comprising at least one treatment device for treating the particles and/or fibres, in particular for temperature control and/or stretching and/or distributing the particles and/or fibres, wherein the apparatus comprises at least one endless belt, in particular at least one foraminous endless belt (1), for depositing the particles and/or fibres to form the particle deposit and/or fibre deposit, wherein
the endless belt, in particular the foraminous endless belt (1), is guided between at least two deflecting rollers (2, 3) over at least two support rollers (4), wherein the support rollers (4) each extend over the entire width of the endless belt or foraminous endless belt (1), **characterized in that** the supporting rollers (4) have a diameter (D) of less than 200 mm, preferably of less than 190 mm, preferably of less than 180 mm and particularly preferably of less than or equal to 170 mm,
wherein two support rollers (4) in the conveying direction of the endless belt or foraminous endless belt (1) have a distance (A) of more than 1000 mm, preferably of more than 1700 mm, preferably more than 2000 mm and particularly preferably of more than 2500 mm.

2. Apparatus according to Claim 1, wherein the apparatus as a fibre-generating device comprises at least one spinneret (5) for spinning continuous filaments (6), furthermore at least one cooling device (7) for cooling the continuous filaments (6) as well as at least one stretching device (8) for stretching the continuous filaments (6) and wherein the stretched continuous filaments (6) can be deposited as a nonwoven deposit on the endless belt or foraminous endless belt (1).

3. Apparatus according to Claim 1, wherein the apparatus as a fibre-generating device comprises at least one melt-blown nozzle (9) for producing continuous filaments (6) and wherein the continuous filaments (6) can be deposited as a nonwoven deposit on the endless belt or foraminous endless belt (1).

4. Apparatus according to one of Claims 1 to 3, wherein the production speed of the apparats and therefore the endless belt speed or foraminous endless belt speed is 100 to 1500 m/min, in particular 200 to 1300 m/min, preferably more than 900 m/min, preferably more than 1000 m/min.

5. Apparatus according to one of Claims 1 to 4, wherein at least three support rollers (4) which extend over the entire width of the endless belt are arranged between two deflecting rollers (2, 3) of the endless belt.

6. Apparatus according to one of Claims 1 to 5, wherein the support rollers (4) are configured as tubes or hollow cylinders and wherein the wall (28) of the support rollers (4) has a wall thickness (w) of 3 mm to 30 mm, preferably of 3 mm to 10 mm.

7. Apparatus according to Claim 6, wherein the wall (28) of the support rollers (4) consists or substantially consists of plastic, in particular of a fibrereinforced plastic, preferably of a carbon-fibre-reinforced plastic.

8. Apparatus according to one of Claims 1 to 7, wherein the bearings or roller bearings (10) arranged at both ends of a support roll (4) are arranged or received with inner race (11) and outer race (12) inside the respective support roller (4).

9. Apparatus according to one of Claims 1 to 8, wherein at least one sealing ring or O-sealing ring (13, 14) is arranged between a bearing or roller bearing (10) and the associated support roller (4).

10. Apparatus according to Claim 9, wherein at least one (first) sealing ring or O-sealing ring (13) is provided for securing or securing the position of an outer race (12) of the bearing or roller bearing (10) between the outer race (12) and the support roller (4) and is preferably arranged inside a groove (15) of the support roller (4).

11. Apparatus according to one of Claims 9 or 10, wherein at least one (second) sealing ring or O-sealing ring (14) for securing or securing the position of an inner race (11) of the bearing or roller bearing (10) is arranged between the inner race (11) and a journal pin (16) for the support roller (4).

12. Apparatus according to one of Claims 1 to 11, wherein at least one support roller (4), preferably all the support rollers (4), extends/extend as a single continuous support roller (4) over the entire width of the endless belt or foraminous endless belt (1).

13. Apparatus according to one of Claims 1 to 12, wherein at least one support roller (4), preferably all the support rollers (4), is/are (each) composed of part-support rollers (4.1, 4.2), wherein preferably two part-support rollers (4.1, 4.2) of a support roller (4) are connected to one another via a bearing arrangement (17).

14. Apparatus according to one of Claims 1 to 13, wherein a bearing or roller bearing (10) of a support roller (4) is arranged with a distance (a) from the end or end face (18) of the support roller (4), which distance (a) is at least 1/30, preferably at least 1/25 of the length (L) of the support roller (4).

15. Apparatus according to one of Claims 1 to 14, wherein the support rollers (4) have a slenderness ratio of more than 1:17.5, preferably of more than 1:22.5 and preferably of more than 1:29.5.

16. Apparatus according to one of Claims 1 to 15, wherein the intermediate space (18) between two successive support rollers (4) is filled at least partially, preferably for the most part, by at least one plate element (19) extending in the conveying direction of the endless belt or foraminous endless belt (1) and wherein the upper side of such a plate element (19) is arranged at a distance (z) underneath the upper side of the support rollers (4).

17. Apparatus according to one of Claims 1 to 16, wherein a support roller (4) is received in a housing (20), wherein the housing (20) has at least one side wall (21) and an underside bottom wall (22) adjoining the side wall (21) and wherein the housing (20) extends over at least the majority of the length (L) of the associated support roller (4).

18. Apparatus according to one of Claims 16 or 17, wherein a plate element (19) rests with at least one end (23) on a housing (20) or on a side wall (21) of a housing (20) .

## Revendications

1. Dispositif, comprenant au moins un système de production de particules et/ou de fibres, de préférence, par ailleurs au moins un dispositif de traitement, destiné à traiter les particules et/ou les fibres (notamment à tempérer et/ou à étirer et/ou à distribuer les particules et/ou les fibres), le dispositif comportant au moins une bande sans fin (notamment au moins une bande de tamisage sans fin (1)), pour y déposer les particules et/ou les fibres pour la dépose des particules et/ou la dépose des fibres,
la bande sans fin (notamment la bande de tamisage sans fin (1)) étant guidée entre au moins deux cylindres de renvoi (2, 3) par l'intermédiaire d'au moins deux rouleaux porteurs (4), les rouleaux porteurs (4) s'étendant chacun sur toute la largeur de la bande sans fin ou de la bande de tamisage sans fin (1), **caractérisé en ce que** les rouleaux porteurs (4) présentent un diamètre (D) de moins de 200 mm, de préférence de moins de 190 mm, de manière préférentielle, de moins de 180 mm et de manière particulièrement préférentielle, de moins de 170 mm,
deux rouleaux porteurs (4) présentant dans la direction de convoyage de la bande sans fin ou de la bande de tamisage sans fin (1) un écart (A) de plus de 1000 mm, de préférence de plus de 1700 mm, de manière préférentielle, de plus de 2000 mm et de manière particulièrement préférentielle, de plus de 2500 mm.

2. Dispositif selon la revendication 1, le dispositif comportant en tant que système de production de fibres au moins une busette (5), destinée à filer des filaments continus (6), par ailleurs, au moins un dispositif refroidisseur (7), destiné à refroidir les filaments continus (6), ainsi qu'au moins un dispositif d'étirage (8), destiné à étirer les filaments continus (6) et les filaments continus (6) étirés étant susceptibles d'être déposés en tant que dépose de non-tissé sur la bande sans fin ou sur la bande de tamisage sans fin (1).

3. Dispositif selon la revendication 1, le dispositif comportant en tant que système de production de fibres au moins une buse de fusion-soufflage (9), destinée à générer des filaments continus (6) et les filaments continus (6) étant susceptibles d'être déposés en tant que dépose de non-tissé sur la bande sans fin ou sur la bande de tamisage sans fin (1).

4. Dispositif selon l'une quelconque des revendications 1 à 3, la vitesse de production du dispositif et ainsi la vitesse de la bande sans fin ou la vitesse de la bande de tamisage sans fin étant de 100 à 1500 m/minute, notamment de 200 à 1300 m/minute, de préférence de plus de 900 m/minute, de manière préférentielle, de plus de 1000 m/minute.

5. Dispositif selon l'une quelconque des revendications 1 à 4, entre deux cylindres de renvoi (2, 3) de la bande sans fin étant placés au moins trois rouleaux porteurs (4), qui s'étendent sur toute la largeur de la bande sans fin.

6. Dispositif selon l'une quelconque des revendications 1 à 5, les rouleaux porteurs (4) étant conçus sous la forme de tubes ou de cylindres creux et la paroi (28) des rouleaux porteurs (4) présentant une épaisseur de paroi (w) de 3 mm à 30 mm, de préférence de 3 mm à 10 mm.

7. Dispositif selon la revendication 6, la paroi (28) des rouleaux porteurs (4) étant constituée ou sensiblement constituées de matière plastique, notamment d'une matière plastique renforcée par fibres, de préférence d'une matière plastique renforcées par fibres de carbone.

8. Dispositif selon l'une quelconque des revendications 1 à 7, les paliers ou roulements (10) placés sur les deux extrémités d'un rouleau porteur (4) étant placés ou réceptionnés avec une bague intérieure (11) et une bague extérieure (12) à l'intérieur du rouleau porteur (4) concerné.

9. Dispositif selon l'une quelconque des revendications 1 à 8, entre un palier ou un roulement (10) et le rouleau porteur (4) associé étant placé(e) au moins une bague d'étanchéité ou un joint torique (13, 14).

10. Dispositif selon la revendication 9, pour bloquer ou pour bloquer en position une bague extérieure (12) du palier ou du roulement (10), au moins un(e) (premier(ère)) bague d'étanchéité ou joint torique (13) étant prévu(e) entre la bague extérieure (12) et le rouleau porteur (4) et étant placé(e) de préférence à l'intérieur d'une rainure (15) du rouleau porteur (4).

11. Dispositif selon l'une quelconque des revendications 9 ou 10, pour bloquer ou pour bloquer en position une bague intérieure (11) du palier ou du roulement (10), au moins un(e) (deuxième) (bague d'étanchéité ou joint torique (14) étant placé(e) entre la bague intérieure (11) et un tourillon (16) pour le rouleau porteur (4).

12. Dispositif selon l'une quelconque des revendications 1 à 11, au moins un rouleau porteur (4) (de préférence tous les rouleaux porteurs (4)) s'étendant sous la forme d'un unique rouleau porteur (4) traversant sur toute la largeur de la bande sans fin ou de la bande de tamisage sans fin (1).

13. Dispositif selon l'une quelconque des revendications 1 à 12, au moins un rouleau porteur (4) (de préférence tous les rouleaux porteurs (4)) se composant (chacun) de rouleaux porteurs partiels (4.1,4.2), de préférence deux rouleaux porteurs partiels (4.1,4.2) d'un rouleau porteur (4) étant reliés l'un à l'autre par l'intermédiaire d'un ensemble de palier (17).

14. Dispositif selon l'une quelconque des revendications 1 à 13, un palier ou un roulement (10) d'un rouleau porteur (4) étant placé avec un écart (a) par rapport à l'extrémité ou à l'extrémité partielle (18) du rouleau porteur (4), lequel écart (a) étant d'au moins un 1/30, de préférence d'au moins 1/25 de la longueur (L) du rouleau porteur (4).

15. Dispositif selon l'une quelconque des revendications 1 à 14, les rouleaux porteurs (4) présentant un coefficient d'élancement de plus de 1 : 17,5, de préférence de plus de 1 : 22,5 et de manière préférentielle, de plus de 1 : 29,5.

16. Dispositif selon l'une quelconque des revendications 1 à 15, l'interstice (18) entre deux rouleaux porteurs (4) consécutifs étant rempli au moins en partie, de préférence en majeure partie par au moins un élément formant plaque (19) s'étendant dans la direction de convoyage de la bande sans fin ou de la bande de tamisage sans fin (1) et la face supérieure d'un tel élément formant plaque (19) étant placée avec un écart (z) en-dessous de la face supérieure des rouleaux porteurs (4).

17. Dispositif selon l'une quelconque des revendications 1 à 16, un rouleau porteur (4) étant réceptionné dans un carter (20), le carter (20) comportant au moins une paroi latérale (21) et une paroi inférieure (22) se raccordant sur la paroi latérale (21) et le carter (20) s'étendant au moins sur la majeure partie de la longueur (L) du rouleau porteur (4) associé.

18. Dispositif selon l'une quelconque des revendications 16 ou 17, au moins un élément formant plaque (19) reposant par au moins une extrémité (23) sur un carter (20) ou sur une paroi latérale (21) d'un carter (20).
